# EUROPEAN PATENT SPECIFICATION

(11) **EP 4 532 112 B1**
(45) Date of publication and mention of the grant of the patent: **12.08.2026**
(21) Application number: 23729706.4
(22) Date of filing: 25.05.2023
(51) Int. Cl.: B02B 3/02, B02C 4/06, B02C 4/30, B02C 4/38, B02C 4/40, B02C 23/12, A21D 13/02, A23L 7/109

(54) **PROCESS FOR THE PRODUCTION OF WHOLE SEMOLINA**
VERFAHREN ZUR HERSTELLUNG VON GESAMTSEMOLINA
PROCÉDÉ DE PRODUCTION DE SEMOULE COMPLÈTE

(30) Priority: 30.05.2022 IT 202200011339
(43) Date of publication of application: 09.04.2025
(73) Proprietor: Barilla G. e R. Fratelli S.p.A., 43122 Parma (IT)
(72) Inventor: LAVOLPE, Saverio, 44122 Ferrara (IT); ROSSI, Stefano, 43022 Montechiarugolo (PR) (IT); TIRELLI, Martino, 41057 Spilamberto (MO) (IT)
(74) Representative: Botti & Ferrari S.p.A.
(86) International application number: PCT/EP2023/064082
(87) International publication number: WO 2023/232642

(56) References cited:
- EP-A1- 0 373 274
- EP-A1- 1 785 192
- EP-B1- 1 554 042
- US-A1- 2005 019 470
- US-A1- 2019 150 458

## Description

### Field of application

The present invention relates to the food industry sector and particularly refers to a process for the production of a whole durum wheat (*Triticum turgidum* var. *durum,* Desf.) semolina.

### Prior art

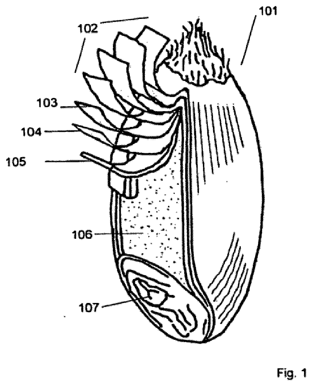

Cereals (especially wheat, rice, corn, barley, oat, rye) are consumed all over the world as staple food, since they are a primary source of carbohydrates thanks to the high content of starch contained in the endosperm, which can be found in the middle part of the durum wheat caryopsis (see Fig. 1) and is the main element thereof.

Referring to Fig. 1, the structure of the caryopsis, also known as "grain", of durum wheat 101, is outlined.

Analysing the layers of the durum wheat caryopsis, from the outermost to the innermost, the following layers form the bran of the caryopsis: four cellular layers (longitudinal, transversal, crossed and tubular) which form together the pericarp 102 (3-6% by weight of the total weight of the caryopsis), than the testa (o tegument) layer 103, the nucellar layer (or hyaline layer) 104 and the aleurone 105, which form together the coating of the seed ^{1,2,3}.

The germ 107 is present externally, in the lower part of the durum wheat caryopsis.

The inner part of the caryopsis is made up of the endosperm 106.

The layer of the aleurone, which forms 5-7 % by weight of the total weight of the caryopsis, is made up of a layer of large polygonal cells contacting the endosperm^{1,2}.

Semolina is the main product of the process of milling durum wheat, which main target is to obtain a final product with a high degree of purity (sifted). In particular, semolina is made up of the innermost starchy parts of the caryopsis (endosperm) after the separation of the outermost parts of the caryopsis (that is the bran, which forms about 15% of the main content of the caryopsis, and the germ which forms about 3%) traditionally used for animal feeding.

In this regard, the modern industrial process for the production of durum wheat semolina tends to maximize the efficiency of this separation through a series of multiple operations (decortication, milling, sieving) in order to perform the separation and removal of the bran from the parts of the endosperm of the caryopsis which will form the final semolina.

In the last decade, the nutritional value of the "whole-wheat" cereal semolina has been progressively recognized, i.e., those containing the largest possible amount of the starting components of the caryopsis^{4,5}, and therefore also of the bran^{6,7}, which was recognized in recent years as an essential element for a healthy diet for the maintenance of a good state of health of the human being.

A complex series of micronutrients can be found in the bran, such as, for example, dietary fibres (insoluble and soluble), minerals, lipids, vitamins and a class of so-called "phytochemical" components, having protective (antioxidant) function in the cellular metabolism and in the phenomena linked to aging^{8,9,10,11,12}. At present, there are many studies and demonstrations of the beneficial effect of the daily consumption of whole-what products in relation to the different type of pathologies¹³⁻²⁷.

Despite the nutritional properties of wholemeal semolina, its consumption in the form of pasta and bakery products is currently hindered by the organoleptic difference perceived by the consumer compared to the corresponding finished products obtained from semolina (formed only by the endosperm of the caryopsis and therefore devoid of bran).

In particular, most part of the whole-wheat products are generally penalized by a series of organoleptic elements which find little appreciation by the consumer, among which, for example, the appearance (dark colour), the consistency (coarse, heavy), the strong flavour which is often associated with the formation of unpleasant aromas over time, which strongly limit the use thereof.

For this reason, the consumption of whole cereals in the form of whole-wheat pasta or whole-wheat bakery products, even if recognized as healthier, is often associated with a sense of organoleptic "dissatisfaction" by the consumer.

The most recent processes for the production of cereal semolina comprise a step of removal of the outer layers of the caryopsis by rub-down and abrasion (decortication) operations, followed by a step of milling the fractions of caryopsis formed only by endosperm, obtained in the previous step, and a step of sieving (sifting) of the milled fractions, thus obtaining a semolina with a reduced content of bran. Thereby, around 75% of the bran is removed, and the following steps of milling and separation of the residual bran are simplified.

For the production of the whole semolina, the aforementioned production processes further provide for the collection of two or more bran layers, corresponding to as many steps of rub-down or abrasion carried out on the caryopses. Taking into account these parts, the first bran layers are the richest in cellulose fibres, since they correspond to the outermost layers of the caryopsis, while the bran innermost layers are the richest in proteins, since they comprise, among other things, the part of the aleuronic layer. The recovered bran layers are then mixed with the semolina obtained after the decortication, thus obtaining a whole semolina.

Anyway, the whole durum wheat semolina obtained with the aforementioned processes, and especially the products derived therefrom (edible pasta, bakery products), has the same above-highlighted organoleptic drawbacks and furthermore a poorly homogeneous structure (texture).

EP 1 785 192 (Barilla G. and R. Fratelli S.p.A.) describes a process for the production of edible pasta from durum wheat semolina, comprising a step of subjecting durum wheat caryopses, having an endosperm and a germ enclosed inside a multilayer bran coating (whose innermost layers correspond to the aleuronic, nucellar and testa layers), to subsequent steps of abrasion in order to substantially remove the bran coating, thus obtaining various fractions of bran, the latter of which mainly derives from the removal of the aforementioned aleuronic, nucellar and testa layers; a step of mixing of 5%-30% w/w of this latter fraction of bran with a durum wheat semolina substantially deprived of bran (durum wheat semolina) and, finally, a step of producing edible pasta by conventional techniques, starting from the mixture of semolina obtained by the previous step.

Therefore, unlike the aforementioned processes, this process allows to add only some outer layers of the durum wheat caryopsis, that is mainly the aleuronic, nucellar and testa layers of the bran of the durum wheat caryopses.

Thereby, an improvement of the structure and organoleptic characteristics of the edible pasta containing bran can be obtained, however, the nutritional characteristics of the durum wheat caryopsis are not fully used.

Furthermore, the typical processes for the production of whole durum wheat semolina, including the one described in EP 1 785 192, provide a wetting treatment of the durum wheat caryopses which is preliminary to the abrasion or decortication steps and is known as conditioning ("*tempering"* or *"dampening"*), wherein the durum wheat caryopses are externally water-wetted for a pre-set amount of time, for example between 5 hours and 9 hours, in order to increase the moisture content and, accordingly, soften them and ease the carrying out of the following steps of decortication, abrasion and also milling (purifiers).

This conditioning preliminary step, however, involves different drawbacks in a process for the production of durum wheat semolina on an industrial scale.

The water-wetting of the wheat caryopses can indeed cause an increase in the microbial load of the caryopses, whose control requires specific treatments and tests during the whole production process; furthermore, precisely due to the increase in the microbial activity, the final semolina obtained from the moist wheat caryopses can be characterized by microbiological instability and can therefore have a reduced shelf-life at room temperature due to the development of "off-notes" or "off-flavours" (for example rancid or cardboard-like taste).

Furthermore, the water-wetting involves important energy consumptions related to the water consumption for conditioning the wheat caryopses, as well as the logistic transport in the plant of wheat and water semolina during the various steps of the process.

An object of the present invention was to provide a process for the production of whole durum wheat semolina which is simpler and cheaper to carry out and allows to preserve the nutritional characteristics of the whole durum wheat caryopses as much as possible, so as to overcome the drawbacks of the known processes described above.

### Summary of the invention

Said object was achieved by a dry process for the production of whole durum wheat (*Triticum turgidum* var. *durum, Desf.*) semolina, comprising the steps of:
a) subjecting durum wheat caryopses, having an endosperm and a germ enclosed in a multilayer bran coating comprising externally the pericarp, and internally layers corresponding to aleurone layer, nucellar layer and testa layer, to a step of decortication in order to remove the germ and only the outermost layer or outermost layers of said pericarp, preferably two outermost layers of said pericarp, obtaining decorticated durum wheat caryopses deprived of said germ and said outermost layer or said outermost layers of said pericarp;
b) subjecting said decorticated durum wheat caryopses to a milling step, obtaining fractions of decorticated and milled durum wheat caryopses;
c) subjecting said fractions of decorticated and milled durum wheat caryopses to sieving, selecting fractions having a particle size lower than or equal to 500µm, thus obtaining a whole durum wheat semolina in which, preferably, at least 70% w/w has a particle size equal to or greater than 180 µm.

Preferably, the process does not comprise any step of wetting durum wheat caryopses, in particular before said step of decortication. They are therefore subjected to the processing steps of the process according to the invention with their native moisture content, generally lower than 13%, typically lower than 11%.

The process of the invention allows to directly reduce the entire durum wheat caryopsis in fractions of semolina that have specific particle sizes and are suitable for making pasta and preparing bakery products, without any need to add separately-prepared bran fractions, as happen in the known processes described above, wherein the whole durum wheat semolina is instead obtained by mixing a predetermined amount of durum wheat semolina (deprived of bran) with a predetermined amount of one or more previously-prepared fractions of bran of the durum wheat caryopsis.

This advantageously entails a considerable simplification of the production process and the apparatuses used for carrying it out with consequent considerable savings in production costs. Meanwhile, as will be better seen in the following, the process according to the invention allows to obtain a durum wheat semolina which maintains most part of the nutritional characteristics of the original durum wheat caryopses in terms of fibre content and protein content and has good organoleptic characteristics as well as an ash content compliant with the provisions of regulations in force, in particular of the Italian legislation.

Further characteristics and advantages of the present invention will become more apparent from the following detailed description, provided by way of non-limiting example with reference to the attached figures.

### Brief description of the figures

Figure 1 schematically illustrates a durum wheat caryopsis.
Figure 2 schematically illustrates a plant for the production of whole durum wheat semolina through the process according to the present invention.

### Detailed description of the invention

In the present description, the terms "durum wheat caryopsis" and "durum wheat" are used in an interchangeable manner.

As used herein, the term "whole semolina" indicates the product obtained according to the present process, characterized by a particle size lower than 500 µm and of which, preferably, at least 70% w/w has particle size equal to or greater than 180 µm.

The process according to the present invention can provide a series of preliminary cleaning treatments in order to remove impurities which are present in the durum wheat coming from the harvesting from the field.

In this regard, a first cleaning treatment can provide the feeding of the durum wheat into a series of separators characterized by sieves having a mesh size between 7mm and 12mm, for removing impurities coarser than a durum wheat caryopsis, for example lumps of earth, stones, foreign bodies, foreign seeds; and sieves having a mesh size between 1 mm and 3 mm to remove the impurities finer than a durum wheat caryopsis, for example sand, small vetches, small foreign seeds.

Successively, the durum wheat exiting the aforementioned separators can be subjected to an air flow generated in designated machines (a winnowing suction cleaner) in which it is fed to remove the impurities lighter than a durum wheat caryopsis, including particularly light caryopses, straw and dust.

Therefore, the durum wheat can be passed through optical sorters capable of removing, through a collimated air flow, possible remaining defects, including for example corn, soy, sunflower, rye, vetches, oat, small stones, rotten caryopses, fusariated caryopses, small lumps of earth, and other impurities foreign to the durum wheat which were not removed during the previous steps.

After having been cleaned and selected as described above, the durum wheat caryopses can be stored in an intermediate storage container 1 before being processed in the process according to the invention.

Successively, the durum wheat caryopses, for example coming from the storage container 1 are fed into a decorticator 2 for the removal of outermost bran layers. The decorticator 2 is provided with rotating abrasive wheels which remove the outermost bran layers of the durum wheat caryopsis, progressively removing them from the grain of wheat. The rub-down and the abrasion are adjusted by the rotation speed V of the wheels and by the staying time of the durum wheat in the working chamber of the decorticator 2, wherein the staying time can be adjusted by a diaphragm or conus (not shown) which adjust the output from the decorticator 2 of the decorticated durum wheat caryopses.

According to an aspect of the present invention, the decortication is performed at an absolute speed of the abrasive wheels so as to remove only one or more outermost layers of the pericarp of the caryopsis, as well as the germ of the caryopsis, without splitting or breaking the grain.

In this regard, the step of decortication is preferably performed at an absolute speed of the abrasive wheels between 30 Hz and 50 Hz, corresponding to 900-1,500 revolutions per minute of the motor and of the same wheels (direct transmission of the rotational motion), for a predetermined amount of staying time (for example, 5-15 seconds) of the durum wheat inside the decorticator. Said staying time can be achieved by modifying the decorticator so as to eliminate the brakes or beaters normally present inside machines of this type.

The aforementioned parameters of absolute speed of the abrasive wheels and staying time in the decorticator guarantee an efficient elimination of the outermost parts of the durum wheat caryopsis and the correct achievement of the desired chemical-physical and nutritional parameters in the finished product.

In particular, the removal of the outermost first bran layers of the wheat caryopsis, performed as described above, advantageously allows to reduce the ash content in the whole durum wheat semolina obtained at the end of the process according to the invention and in the products obtained by it such as the edible pasta, so as to comply with the food regulations in force, in particular with the provisions of the Italian Law for the production of whole durum wheat semolina (DPR_187-2001).

Furthermore, by eliminating only the first outermost bran layers of the wheat caryopsis, a whole durum wheat semolina is obtained at the end of the process according to the invention, which semolina maintains most of the nutritional characteristics of the original durum wheat caryopses in terms of high fibre content and high protein content without compromising the organoleptic characteristics.

At the end of the decortication, a bran product 4 extracted by the abrasion of the durum wheat is obtained, which is essentially formed by the external layers: first outermost layer or first two outermost layers of the pericarp 102 and germ 107, the latter detaching for the mechanical action exerted by the decorticator, and a flow of decorticated durum wheat.

The removal of the germ is greatly beneficial for the organoleptic characteristics of the whole durum wheat semolina, and the products obtainable by it, since it hinders the oxidative rancidity on the fat fraction contained in the germ, avoiding the consequent creation of off-notes and the drastic reduction of the shelf-life of the whole semolina and the related products obtained by it.

The bran product 4 is removed, by means of the process, along the flow line 3 and is aimed to a zootechnical use, while the decorticated durum wheat is fed into a rolling mill 5 in order to perform the following milling step.

The rolling mill 5 comprises a copy of grooved rolling rollers consisting of a rolling main roller (6) and a rolling secondary grooved roller (7), said rollers being grooved and opposed and defining between them a milling space or chamber 8 with predefined size according to the distance between the rollers 6 and 7. The rolling mill 5 furthermore comprises a bell jar 9 for feeding the decorticated durum wheat into the milling chamber 8, said bell jar being arranged upstream the rollers 6 and 7 (with reference to the advancing direction of the durum wheat) close to the inlet in the milling chamber 8.

The rollers 6 and 7 are operated in rotation in opposite directions with respect to each other (counter-rotating rollers) by designated motors commanded by electronic systems (inverters and/or encoders) suitable for controlling the rotation speed of the same rollers; the function of the rollers is to drag the durum wheat caryopses into the milling chamber 8.

In the milling step, the bell jar 9 receives the flow of decorticated wheat caryopses coming from the decorticator 2 and preferably also receives a flow 11 of recycled decorticated and milled durum wheat caryopses which will be discussed hereinafter, and feeds a flow comprising decorticated wheat caryopses coming from the decorticator 2 and preferably recycled decorticated and milled durum wheat caryopses into the milling chamber 8. In said milling chamber 8, the aforementioned decorticated durum wheat caryopses are grinded by rub-down and compression forces exerted by the rollers 6,7 thereby obtaining fractions of decorticated and milled wheat caryopses with particle size varying depending on the milling conditions, such as in particular the rotation speed of the rollers and the distance between them which defines the milling chamber 8.

Preferably, in the process according to the invention, the main roller 6 and the rolling secondary roller 7 are both set in rotation at a speed between 50rpm and 93rpm, preferably between 80rpm and 88rpm with a differential rotation ratio between the secondary roller 7 and the main roller 6 between 1:1.10 and 1:1.40.

Furthermore, the distance between the circumferential surfaces defined by the grooves of the rollers 6,7, which defines the width of the milling chamber 8 between the rollers, is adjusted so as to be comprised, preferably, in the range between 2 and 10 mm, preferably between 6 and 8 mm, so as to produce a milled product (whole durum wheat semolina) with specific pre-set particle sizes suitable for the use of said semolina in the production of food products, such as in particular pasta and bakery products.

By carrying out the milling step in the aforementioned operating conditions of differential rotation ratio between the rollers and distance between the rollers, it is advantageously possible to exert a correct pressure (compression) force on the caryopses introduced into the milling chamber 8, simultaneously exerting a correct friction of the caryopses processed thanks to the pre-set differential rotation ratio of the rollers. In particular, in the aforementioned operating conditions, the pressure exerted by the rollers on the caryopses introduced into the milling chamber is adequate and substantially remains constant during the whole milling step without being excessive so as to allow the opening of the rollers and, accordingly, continuous variations of the sizes of the milling chamber, as instead occurs in the prior art, which causes a poorly homogeneous distribution of the particle size of the milled product with considerable increase in fractions of products with fine particle size.

Differently, in the process according to the invention, at the end of the milling step, a whole durum wheat semolina is obtained which has a more homogeneous particle size distribution with reference to a desired particle size range which can be pre-set, before the beginning of the process according to the invention, suitably adjusting the distance between the rollers and, accordingly, the width of the milling chamber. Advantageously, this allows to guarantee the qualitative consistency of the finished product.

Furthermore, by carrying out the milling step with a speed of the rollers between 50rpm and 93rpm, preferably between 80rpm and 88rpm, it is possible to achieve an increase in the overall productivity of the plant for the production of durum wheat semolina with respect to conventional plants, simultaneously maintaining the advantages indicated above in terms of qualitative consistency of the finished product.

In an embodiment, the rolling mill 5, with which the milling step is carried out, can further comprise a transducer 10 (load cell) associated with the bell jar 9 and in communication with a command and control unit which, in turn, is in electrical communication with a driving motor of the rolling main roller 6. The transducer 10 is adapted to continuously detect the level of product (head) present in the bell jar 9 by transmitting an electrical signal to the command and control unit which, in turn, commands the motor of one of the aforementioned rollers 6,7 so as to adjust the rotation speed of the respective roller 6 or 7 depending on the "reading" of the transducer 10, so as to guarantee a constant level of product (hydrostatic head) inside the bell jar 9. By maintaining a substantially constant head in the bell jar 9, a composition consistency of the flow containing decorticated durum wheat caryopses coming from the decorticator 2 and decorticated and milled durum wheat caryopses coming from the recycling flow 11, which is introduced into the mixing bell jar 9 of the rolling mill 5, is advantageously guaranteed.

In the process according to the invention, the flow 12 of durum wheat caryopses exiting the milling chamber 8 between the rollers 6,7 is fed into a sifter 13 for carrying out the following step of sieving the decorticated and milled wheat caryopses.

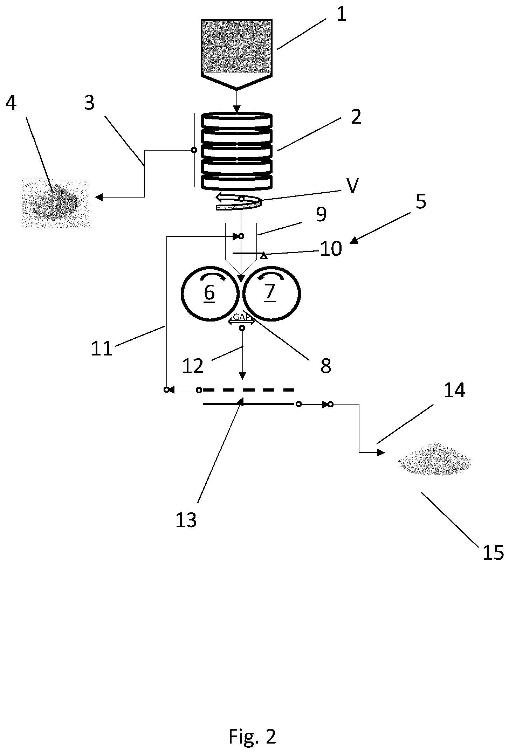

The sifter 13 can comprise a plurality of sieves (for the sake of simplicity, only one of these sieves is shown in figure 2) with seals (veils/riddles) made of a suitable material, for example nylon or stainless steel, suitably sized based on process parameters set for the rolling mill and, accordingly, based on the desired particle size features for the whole durum wheat semolina.

The classification and separation of the milled durum wheat caryopses of the flow 12 exiting the milling chamber 8 are therefore carried out for each particle size on said sieves of the sifter 13. The fractions of milled caryopses having a size greater than a determined size of the sieves of the sifter 13, in particular the fractions of milled caryopses having a size greater than 500µm, do not cross the sieves of the sifter 13 and are recovered thus forming the recycling flow 11 which is sent into the bell jar 9 for further processing of said fractions of caryopses in the milling camera 8.

Differently, the fractions of milled caryopses having sizes so as to cross the suitably sized sieves are recovered and come out from the production plant along the flow line 14 thus forming the whole durum wheat semolina according to the present invention, which can be sent to the storage and packaging (or transport at the transformation plant).

It should be noted that the process for the production of durum wheat semolina according to the invention, as described above, is advantageously carried out "dry" and, in particular, without carrying out any preliminary step of conditioning the durum wheat caryopses to be processed so as to increase the native moisture content thereof, on average equal to 11%, to a value around 17%, as it happens in the known processes.

Thanks to this, the durum wheat is processed in the following steps of decortication, milling and sieving, maintaining the same moisture content of the harvest, without adding water, thus allowing to limit the microbic load of both the product being processed and the final product.

Furthermore, since the durum wheat does not have to be conditioned, plants or machines specific for the purpose are not necessary, such as for example the "wheat wetting", water screws and resting rooms, in which bacteria, yeasts and moulds can proliferate, thus reducing the microbiological stability of the final product.

Therefore, the present process allows to improve the shelf-life of the final product, precisely thanks to its reduced moisture content (< 13%, preferably < 11%); differently, a whole durum wheat semolina obtained by the known processes, which include at least one step of conditioning, has a moisture content of about 15.5% and, for this reason, they are characterized by a shelf-life lower than the one of the product obtained according to the present invention.

Precisely thanks to this reduced moisture content, the whole durum wheat semolina obtained according to the present invention furthermore allows to increase the productivity of the food products obtained from said whole semolina, for example dry edible pasta, proportionally to the difference of given moisture of the semolina (for example < 11% vs. < 15.5%).

Furthermore, thanks to the fact that, in the process according to the invention, the durum wheat is processed without having been previously wetted, no formation of clumps is detected after the step of milling which could instead form after the aforementioned step of "wetting" typically carried out in the known processes for the production of whole semolina.

This allows to avoid the use of a breaker downstream the rolling mill, between the rolling mill and the sifter, to break up said clumps, thereby obtaining a further simplification of the process and of the production plant and also avoiding a worsening of the particle size distribution in the final whole durum wheat semolina in terms of an undesired increase in the fine fraction content (for example lower than 180 µm).

In fact, the whole durum wheat semolina obtained by the process according to the present invention has a particle size distribution which is very similar to the one of the whole semolina obtained by the known processes described above, thus advantageously reducing times and costs of its production at industrial level since it does not advantageously comprise any step of wetting, thus avoiding possible consequent formations of clumps of wetted semolina and following interventions necessary for breaking up said clumps.

In the light of the above, the process according to the present invention also allows to advantageously obtain a considerable energy saving coming from the simplification of the process and of the production plant with respect to the known implants for the production of durum wheat semolina, as well as from the absent water consumption for conditioning the durum wheat; furthermore, the logistic of the whole process is optimized for an increase in the specific weight of the obtained whole durum wheat semolina and for the transport of a lower water quantity in favour of the durum wheat semolina.

The whole durum wheat semolina obtained by the process according to the invention advantageously maintains most of the nutritional characteristics of the starting whole durum wheat caryopses, and, with the same initial durum wheat, it is therefore catheterized by having a higher fibre content and a higher protein content than the conventional whole durum wheat semolina, all this being combined with good organoleptic characteristics and an ash content compliant with the provisions of the regulations in force, in particular of the Italian legislation.

In other words, the whole durum wheat semolina obtained with the process according to the invention has a lower moisture content (lower than 13%, preferably lower than 11%) with respect to the one of the conventional whole durum wheat semolina (around 15%) and essentially corresponds to the one of the starting durum wheat caryopses of the harvest, which allows to significatively increase its shelf-life with respect to the conventional whole semolina substantially maintaining the organoleptic characteristics unchanged throughout all the shelf-life.

The whole durum wheat semolina obtained with the process according to the invention is particularly suitable for obtaining finished food products, such as pasta and bakery products, in which the advantages in a high fibre content and high protein content coming from the maintenance of the nutritional characteristics of the starting durum wheat caryopses are combined with organoleptic characteristics of higher quality than finished products (in particular pasta) obtained by using conventional whole durum wheat semolina in terms of flavour, colour and structure.

The present invention will be further described with reference to the examples given below by way of non-limiting example.

### EXAMPLE

### EXAMPLE 1 (comparative)

### Preparation of whole durum wheat semolina by a conventional process

1000 Kg of durum wheat previously subjected to conventional steps of cleaning were added with a quantity of water so as to take the moisture content of the caryopses to 17% and were subsequently treated by wheat wetting and rested in resting rooms.

The durum wheat at the end of the cleaning step had the characteristics indicated in the following Table 1.

**Table 1**

| **Composition** | **Result (average ± Std Dev.)** | **Unit of measurement** | **Method error** |
|---|---|---|---|
| **Moisture** | 11.0 ± 0.5 | % | 0.2 |
| **Ashes** | 1.70 ± 0.05 | % on dry basis | 0.01 |
| **Proteins** | 15.5 ± 1.0 | Nx5.70, % on dry basis | 0.5 |
| **Total dietary fibre (*)** | 11.0 ± 0.7 | % on wet basis | 1.7 |
| | 12.5 ± 0.8 | % on dry basis | - |
| **Total starch** | 58.3 ± 1.3 | % on wet basis | 5.0 |
| **Fat matter** | 2.36 ± 0.15 | % on wet basis | 0.3 |

| | | | |
|---|---|---|---|
| (*): AOAC 991.43 2000 - enzymatic-gravimetric), carried out at Eurofins Chemical Control Srl. | | | |

After a single conditioning of 5 hours, the caryopses were fed to a first decortication or abrasion machine, comprising a rotating shaft with vertical axis on which Carborundum abrasive wheels are mounted, which are arranged so as to determine the removal of the germ and the outermost and intermediate bran layers (substantially up to the innermost layer of the pericarp) in form of powder recovered by suction. A subsequent passage of the caryopses exiting the first decorticator in a second decortication machine provided for the elimination of the innermost bran layers still in the form of powder.

The caryopses exiting the second decortication machine were subjected to a third and last step of decortication. Here, the decorticated caryopses were milled according to the operational modes usually used for milling of caryopses on wet basis, thus obtaining 790 kg of flour substantially made up of endosperm which was subjected to sieving in a sifter having a plurality of sieves with meshes having sizes equal to or lower than 500 µm, selecting fractions of the flour having a particle size lower than or equal to 500 µm.

A portion of the fraction of powdered bran exiting the second and third decorticators was re-joined with the flour fractions selected by sieving in a weight ratio of 15%, thus obtaining 908 kg of a whole durum wheat semolina having the characteristics indicated in the following Table 2.

**Table 2**

| **Composition** | **Result (average ± Std Dev.)** | **Unit of measurement** | **Method error** |
|---|---|---|---|
| **Moisture** | 15.3 ± 0.2 | % | 0.2 |
| **Ashes** | 1.60 ± 0.05 | % on dry basis | 0.01 |
| **Proteins** | 14.4 ± 0.5 | Nx5.70, % on dry basis | 0.5 |
| **Total dietary fibre (*)** | 7.8 ± 0.7 | % on wet basis | 1.4 |
| | 9.2 ± 0.8 | % on dry basis | - |
| **Total starch** | 61.0 ± 0.7 | % on wet basis | 5.0 |
| **Fat matter** | 2.30 ± 0.10 | % on wet basis | 0.3 |

| | | | |
|---|---|---|---|
| (*): AOAC 991.43 2000 - enzymatic-gravimetric), carried out at Eurofins Chemical Control Srl. | | | |

### EXAMPLE 2

### Preparation of whole durum wheat semolina by the process of the invention

1000 Kg of durum wheat previously subjected to conventional steps of cleaning and then stored were processed in a plant for the production of durum wheat semolina as illustrated Figure 2.

The durum wheat at the end of the cleaning had the characteristics indicated in the above Table 1.

The durum wheat coming from a storage tank 1 was fed into a decortication machine (decorticator) 2 having the characteristics indicated in Example 1, thus obtaining the removal of the germ and the outermost bran layers of the pericarp in form of powder recovered by suction.

The caryopses exiting the decortication machine 2 were fed into the bell jar 9 and from the latter to the rolling mill 5 where they were milled by passage in the milling chamber 8 between the rollers 6 and 7. The rollers operated at a rotation speed of 88rpm and 71.5rpm, respectively, and the distance between the circumferential surfaces of the rollers 6 and 7 was 8 mm.

The flow of milled caryopses exiting the rolling mill 5 was subjected to sieving in a sifter 13 having a plurality of sieves with mashes having sizes equal to or lower than 500 µm, selecting fractions of the milled caryopses having a particle size lower than or equal to 500 µm and recirculating, in the bell jar 9, fractions of the milled caryopses having a particle size greater than 500 µm. 950 kg of a whole durum wheat semolina according to the invention having the characteristics indicated in the following Table 3 were therefore obtained:

**TABLE 3**

| **Composition** | **Result (average ± Std Dev.)** | **Unit of measurement** | **Method error** |
|---|---|---|---|
| **Moisture** | 10.0 ± 0.4 | % | 0.2 |
| **Ashes** | 1.55 ± 0.05 | % on dry matter | 0.01 |
| **Proteins** | 14.9 ± 0.4 | Nx5.70, % on dry matter | 0.5 |
| **Total Dietary Fibre (*)** | 10.0 ± 0.8 | % on wet matter | 1.6 |
| | 11.2 ± 0.9 | % on dry matter | - |
| **Total starch** | 60.8 ± 1.0 | % on wet matter | 5.0 |
| **Fat matter** | 2.40 ± 0.10 | % on wet matter | 0.3 |

| | | | |
|---|---|---|---|
| (*): AOAC 991.43 2000 - enzymatic-gravimetric), carried out at Eurofins Chemical Control Srl. | | | |

From the comparison between the characteristics of the whole semolina obtained with the conventional process of Example 1 (Table 2) and the characteristics of the whole semolina obtained with the process of the invention (Table 3), it can be seen that the whole semolina of the invention is characterized by a lower moisture content (10% vs. 15.3%), due to the lack of the preliminary step of conditioning of the durum wheat in the process according to the invention, a higher fibre content and a slightly higher protein content.

At the same time, the ash content of the whole semolina obtained with the process of the invention is compliant with the Italian legislation in force (DPR_187-2001).

### EXAMPLE 3

### Preparation of whole durum wheat pasta

With the whole durum wheat semolina obtained according to Example 1, a comparative whole-wheat pasta was prepared, using it in the conventional production process of the traditional durum wheat semolina pasta, in place of the sifted durum wheat semolina, through the traditional steps of making pasta with water, forming by extrusion and drying up to a moisture content of about 11.5%.

The whole-wheat pasta prepared in this way had the characteristics displayed in the following Table 4.

**TABLE 4**

| **Composition** | **Result (average ± Std Dev.)** | **Unit of measurement** | **Method error** |
|---|---|---|---|
| **Moisture** | 11.5 ± 0.5 | % | 0.2 |
| **Ashes** | 1.60 ± 0.05 | % on dry matter | 0.01 |
| **Proteins** | 14.4 ± 0.5 | Nx5.70, % on dry matter | 0.5 |
| **Total dietary fibre (*)** | 8.0 ± 0.7 | % on wet manner | 1.4 |
| | 9.5 ± 0.6 | % on dry matter | - |

| | | | |
|---|---|---|---|
| (*): AOAC 991.43 2000 - enzymatic-gravimetric), carried out at Eurofins Chemical Control Srl. | | | |

Similarly, a whole-wheat pasta according to the invention was prepared with the whole durum wheat semolina obtained according to Example 2.

The whole-wheat pasta prepared in this way had the characteristics displayed in the following Table 5.

**TABLE 5**

| **Composition** | **Result (average ± Std Dev.)** | **Unit of measurement** | **Method error** |
|---|---|---|---|
| **Moisture** | 11.5 ± 0.5 | % | 0.2 |
| **Ashes** | 1.55 ± 0.05 | % on dry matter | 0.01 |
| **Proteins** | 15.0 ± 0.5 | Nx5.70, % on dry matter | 0.5 |
| **Total dietary fibre (*)** | 10.7 ± 0.5 | % on wet matter | 1.4 |
| | 11.5 ± 0.6 | % on dry matter | - |

| | | | |
|---|---|---|---|
| (*): AOAC 991.43 2000 - enzymatic-gravimetric), carried out at Eurofins Chemical Control Srl. | | | |

From the comparison between the characteristics of the comparative whole-wheat pasta (Table 4) and the characteristics of the whole-wheat pasta obtained by the process according to the invention (Table 5), it can be seen that the latter is also characterized in that it has a higher fibre content and a slightly higher protein content than the comparative whole-wheat pasta.

### Materials and Methods

The analyses of the characteristics of the semolina and the whole-wheat pasta in Tables 2-5 were carried out using the methods listed below:
1. analysis of the moisture content: DM 27/05/1985 GU no. 145 21/06/1985 - particle sizing, carried out at Eurofins Chemical Control Srl;
2. analysis of the ash content: UNI ISO 2171 (July 1993) - Cereals, legumes and derived products. Determination of the ashes"
3. analysis of the protein content: AOAC 992.23 1998 - Dumas (TCD), carried out at Eurofins Chemical Control Srl;
4. analysis of the starch content: MI 234 rev 02/2013 - Polarimetry, carried out at Eurofins Chemical Control Srl;
5. analysis of the lipid content: DM 23/07/1994 SO GU no. 186 10/08/1994 - Particle sizing, carried out at Eurofins Chemical Control Srl;
6. Analysis of the particle size: Retsch sieving machine provided with sieves with specific passing port, operated for 5 minutes and loaded with 100 g of product under analysis.

### Bibliographical references:

1) Y. Pomeranz, Wheat chemistry and Technology, Volume I, 47-95,Ed. AACC, Thrid edition, 1988
2) Antoine C., Lullien-Pellerin V., Abecassis J., Rouau X. - Intéret nutritionnel de la couche à aleurone du grain deblé, Industries des céréales, n° 133, Juin/Juiflet ,4-10, 2003.
3) B. Godon, Bioconversion of Cereal Products, 1st Ed., Nov. 1993 Wiley-Vch, pp 18-19
4) Marquart L., Fulcher G., Slavin J. Whole grain and Health Past, Present, and Future. American Inst. of Baking Technical Bulletin, Volume XXV, Issue 2, February 2003
5) CFW. Whole Grain Definition. Cereal Food World, 45: 79, 2000
6) USDA/USDHHS. Nutrition and Your Heath: Dietary Guidelines for Americans, 5th ed. U.S. Department of Agriculture/U.S. Department of heath and Human Service. U.S. Government Printing Office, Home and Garden Bulletin No. 232, Washington, DC, May 2000
7) USDA/USDHHS. Dietary Guidelines for Americans 2005, January 12, 2005,
8) F. Esposito, G. Arlotti, A.M. Bonifati, A. Napolitano, D. Vitale, V. Fogliano, Antioxidant activity and dietary fibre in durum wheat bran byproducts, Food Research International 38 , 1167-1173, 2005
9) L. Marquart, G. Fulcher, J. Slavin, Whole Grain and Health; Past, Present and Future, AIB Tech. Bul.,1-14, Vol. XXV, Issue 2, February 2003
10) E. Decker, G.Beecher, J. Slavin, H.E. Miller, L. Marquart, Whole Grain as a Source of Antioxidants, Cereal Foods World, 370-373, Vol. 47, NO8, September-October, 2002
11) M.Bartinik, T. Jakubczyk, Chemical Composition and the Nutritive Value of Wheat Bran World Rev. Nutr. Diet.Basel, Karger, 1998, vol. 60, pp 92 -131
12) C.E. Stauffer, Promise of Whole Grains, Bakers Production Manual, 12-24, May 2003
13) Rimm E.B., Ascerio A., Giovannucci E., Spiegelman D., Stampfer M.J., Willett W.C. Vegetable, fruit and cereal fiber intake and risk of coronary heart disease among men. Journal of the American Medical Association 275: 447-451, 1996
14) Wolk A., Manson J.E., Stampfer M.J., Colditz G.A., Hu F.B., Speizer F.E., Hennerkens C.H., Willett W.C., Longterm intake of dietary fibre and decrease risk of coronary heart disease among women, JAMA, 1998-2004, 1999
15) Jacobs D.J., Meyer K.A:, Kushi L.H., Folsom A.R. Is whole grain intake associated with reduced total and cause specific death rates in older women? The Iowa Women's Health Study. Am. J. Public Health, 89 (3),1-8, 1999
16) Liu S.M., Stampfer M.J., Hu F.B., Giovannucci E., Rimm E., Manson J.E., Hennekens C.H. and Willett W.C., Whole-grain consumption and risk of coronary disease: results from the Nurses' Health Study. American Journal of Clinical Nutrition, 70, 412-419, 1999
17) Anderson J.W., Whole-grain intake and risk for coronary heart disease. In: Whole-Grain Foods in Heart and Disease(Marquat, Slavin and Fulcher, eds.), American Association of cereal Chemists, Inc., St. Paul, MN, 2002
18) Johnston L., Reynolds H.R., Patz M., Hunninnghake D.B., Schulz K., Westereng B.Cholesterol-lowering benefits of a whole grain oat ready-to-eat cereal. Nutrition in Clinical Care 1 (1), 6-12, 1998
19) Jenkins D., Wesson V., Wolever T.M., Jenkins A.L., Kalmusky J., Gidici S., Csima A., Josse R.G., Wong G.S. Whole meal versus whole grain breads: proportion of whole or cracked grain and the glycemic response. Br. Med.J. 297, 958-960, 1988
20) Pereira M.A., Jacobs D.R. Jr., Slattery M.L., Ruth k., Van Horn L., Hilner j., Kushi L.H., the association of whole grain intake and fasting insulin in a biracial cohort of young adults: The CARDIA Study. CVD Prevention, 1, 231-242,1998
21) Ludwing D.S., Pereira M.A., Kroenke C.H., Hilner J.E., Van Horn L., Slattery M.L., Jacobs D.R., Jr. Dietary fibre, weight gain, and cardiovascular disease risk factors in young adults. JAMA, 1539-1546, 1999
22) Pereira M.A., Whole grain consumption and body weight regulation.In: Whole-Grain Foods in Heart and Disease (Marquat, Slavin and Fulcher, eds.), American Association of cereal Chemists, Inc., St. Paul, MN, 2002
23) Meyer K.A:, Kushi L.H., Jacobs Jr. D.R., Slavin J., Sellers T.A. and Folsom A.R. Carbohydrates, dietary fiber, and incident type 2 diabetes in older women. American Journal of Clinical Nutrition, 71, 921-930, 2000
24) Fung T.T., Hu F.B., Pereira M.A., Liu S., Stampfer M.J., Colditz G.A., Hennekens C.H. and Willett W.C. Whole-grain intake and the risk of type 2 diabetes: a prospective study in men. American Journal of Clinical Nutrition, 76,535-540, 2002
25) Jacobs D.R., Marquart L., Slavin J., and Kushi, L.H. Whole grain intake and cancer: an expanded review and meta-analysis. Nutrition and Cancer, 30, 85-89,1998
26) Jacobs D.J., Meyer K.A:, Kushi L.H., Folsom A.R. Is whole grain intake associated with reduced total and cause specific death rates in older women? The Iowa Women's Health Study. Am. J. Public Health, 89 (3),322-329, 1999
27) Jacobs D.J., Pereira M.A., Meyer K.A and Kushi L.H. Fiber from whole grains, but not refined grains, is inversely associated with all cause mortality in older women: The Iowa Women's Health Study. Journal of the American College of Nutrition, 19,326S-330S, 2000.

## Claims

1. A dry process for the production of whole durum wheat semolina, comprising the steps of:
a) subjecting durum wheat caryopses (101), having an endosperm (106) and a germ (107) enclosed in a multilayer bran coating comprising externally the pericarp (102), and internally layers corresponding to aleurone (105) layer, nucellar (104) layer and testa (103) layer, to a step of decortication in order to remove the germ (107) and only the outermost layer or outermost layers of said pericarp (102), preferably two outermost layers of said pericarp (102), obtaining decorticated durum wheat caryopses deprived of said germ (107) and said outermost layer or said outermost layers of said pericarp (102);
b) subjecting said decorticated durum wheat caryopses to a milling step, obtaining fractions of decorticated and milled durum wheat caryopses;
c) subjecting said fractions of decorticated and milled durum wheat caryopses to sieving, selecting fractions having a particle size lower than or equal to 500µm, thus obtaining a whole durum wheat semolina in which at least 70% w/w has a particle size equal to or greater than 180 µm.

2. The process according to claim 1, wherein said process does not comprise any step of wetting durum wheat caryopses.

3. The process according to claim 1 or 2, wherein said durum wheat caryopses have a moisture content equal to or lower than 13%, preferably lower than 11%.

4. The process according to any one of the preceding claims, wherein said step a) of decortication is carried out by a decorticator (2) having abrasive wheels operated at an absolute speed between 30 Hz and 50 Hz.

5. The process according to any one of the preceding claims, wherein said step b) of milling is carried out by a rolling mill (5) comprising a pair of counter-rotating grooved rolling rollers consisting of a rolling main grooved roller (6) and a rolling secondary grooved roller (7), said rollers being opposed and spaced apart and defining between them a milling chamber (8), motor means adapted to drive the rolling rollers in rotation, and adjustment means adapted to regulate the distance between the circumferential surfaces defined by the grooves of said rollers (6,7).

6. The process according to claim 5, wherein said main grooved roller (6) and said rolling secondary roller (7) are both set in rotation at a speed between 50rpm and 93rpm, preferably between 80rpm and 88rpm, with a differential rotation ratio between the secondary roller (7) and the main roller (6) between 1: 1.10 and 1:1.40.

7. The process according to any one of claims 5-6, wherein the distance between the circumferential surfaces defined by the grooves of said rollers (6,7) is comprised between 2 mm and 10 mm, preferably between 6 and 8 mm.

8. The process according to any one of the preceding claims, wherein, at the end of the step c) of sieving, the fractions of milled decorticated durum wheat caryopses having particle size greater than 500 µm are recovered and again subjected to step b) of milling and step c) of sieving.

## Patentansprüche

1. Ein trockenes Verfahren für die Herstellung von Vollkorn-Hartweizengrieß, umfassend die Schritte:
a) Unterwerfen von Hartweizen-Karyopsen (101), die ein Endosperm (106) und einen Keim (107) aufweisen, die in eine mehrschichtige Kleiebeschichtung eingeschlossen sind, die äußerlich das Perikarp (102) und innerlich Schichten, die der Aleuronschicht (105), der Nukellarschicht (104) und der Testaschicht (103) entsprechen, umfasst, einem Schälvorgang, um den Keim (107) und nur die äußerste Schicht oder die äußersten Schichten des Perikarps (102), vorzugsweise zwei äußerste Schichten des Perikarps (102), zu entfernen, wobei geschälte Hartweizen-Karyopsen erhalten werden, denen der Keim (107) und die äußerste Schicht oder die äußersten Schichten des Perikarps (102) entzogen sind;
b) Unterwerfen der geschälten Hartweizen-Karyopsen einem Mahlvorgang, wobei Fraktionen von geschälten und gemahlenen Hartweizen-Karyopsen erhalten werden;
c) Unterwerfen der Fraktionen von geschälten und gemahlenen Hartweizen-Karyopsen einer Siebung, wobei Fraktionen mit einer Teilchengröße kleiner als oder von 500 µm ausgewählt werden, wodurch ein Vollkorn-Hartweizengrieß erhalten wird, bei dem mindestens 70 Gew.-% eine Teilchengröße von 180 µm oder größer als 180 µm haben.

2. Verfahren nach Anspruch 1, wobei das Verfahren keinen Schritt des Befeuchtens der Hartweizen-Karyopsen aufweist.

3. Verfahren nach Anspruch 1 oder 2, wobei die Hartweizen-Karyopsen einen Feuchtigkeitsgehalt von 13 % oder geringer als 13 %, vorzugsweise geringer als 11 % aufweisen.

4. Verfahren nach einem der vorhergehenden Ansprüche, wobei der Schritt a) des Schälens von einer Schälvorrichtung (2) durchgeführt wird, die Schleifscheiben hat, die mit einer absoluten Geschwindigkeit zwischen 30 Hz und 50 Hz betrieben werden.

5. Verfahren nach einem der vorhergehenden Ansprüche, wobei der Schritt b) des Mahlens von einer Walzenmühle (5) durchgeführt wird, die ein Paar gegenläufig rotierender, gerillter, rollender Walzen aufweist, die aus einer rollenden, gerillten Hauptwalze (6) und einer rollenden, gerillten Nebenwalze (7) bestehen, wobei die Walzen einander gegenüberstehen und voneinander beabstandet sind und zwischen sich eine Mahlkammer (8) bilden, mit Antriebsmitteln zum Drehantreiben der rollenden Walzen sowie Einstellmitteln zum Regulieren des Abstandes zwischen den durch die Rillen der Walzen (6,7) definierten Umfangsoberflächen.

6. Verfahren nach Anspruch 5, wobei beide, die gerillte Hauptwalze (6) und die rollende Nebenwalze (7) in Rotation mit einer Drehzahl zwischen 50 Upm und 93 Upm, vorzugsweise zwischen 80 Upm und 88 Upm, versetzt werden, mit einem Differenzdrehzahlverhältnis zwischen der Nebenwalze (7) und der Hauptwalze (6) zwischen 1:1,10 und 1: 1,40.

7. Verfahren nach einem der Ansprüche 5-6, wobei der Abstand zwischen den von den Rillen der Walzen (6, 7) definierten Umfangsoberflächen zwischen 2 mm und 10 mm, vorzugsweise zwischen 6 und 8 mm, liegt.

8. Verfahren nach einem der vorhergehenden Ansprüche, wobei am Ende des Schrittes c) des Siebens die Fraktionen der gemahlenen geschälten Hartweizen-Karyopsen, die eine Teilchengröße größer als 500 µm haben, zurückgewonnen und erneut dem Schritt b) des Mahlens und dem Schritt c) des Siebens unterworfen werden.

## Revendications

1. Procédé à sec pour la production de semoule de blé dur entier comprenant les étapes suivantes :
a) soumettre des caryopses de blé dur (101), ayant un endosperme (106) et un germe (107) enfermés dans une enveloppe de son multicouche comprenant, à l'extérieur, le péricarpe (102) et, à l'intérieur, des couches correspondant à la couche d'aleurone (105), à la couche nucellaire (104) et à la couche de tégument (103), à une étape de décorticage afin d'éliminer le germe (107) et uniquement la ou les couches les plus externes dudit péricarpe (102), de préférence les deux couches les plus externes dudit péricarpe (102), pour obtenir des caryopses de blé dur décortiqués, privés dudit germe (107) et de ladite couche ou desdites couches les plus externes dudit péricarpe (102) ;
b) soumettre lesdits caryopses de blé dur décortiqués à une étape de mouture, pour obtenir des fractions de caryopses de blé dur décortiqués et moulus ;
c) soumettre lesdites fractions de caryopses de blé dur décortiqués et moulus à un tamisage, sélectionner les fractions ayant une granulométrie inférieure ou égale à 500 µm, obtenant ainsi une semoule de blé dur entier dans laquelle au moins 70 % en poids ont une granulométrie égale ou supérieure à 180 µm.

2. Procédé selon la revendication 1, dans lequel ledit procédé ne comprend aucune étape d'humidification des caryopses de blé dur.

3. Procédé selon la revendication 1 ou 2, dans lequel lesdits caryopses de blé dur ont une teneur en humidité égale ou inférieure à 13 %, de préférence inférieure à 11 %.

4. Procédé selon l'une quelconque des revendications précédentes, dans lequel ladite étape a) de décorticage est réalisée par un décortiqueur (2) ayant des meules abrasives fonctionnant à une vitesse absolue comprise entre 30 Hz et 50 Hz.

5. Procédé selon l'une quelconque des revendications précédentes, dans lequel ladite étape b) de mouture est réalisée par un laminoir (5) comprenant une paire de rouleaux de laminage rainurés à rotation inverse, constituée d'un rouleau de laminage principal rainuré (6) et d'un rouleau de laminage secondaire rainuré (7), lesdits rouleaux étant opposés et espacés l'un de l'autre et définissant entre eux une chambre de mouture (8), des moyens moteurs adaptés pour entraîner les rouleaux de laminage en rotation, et des moyens de réglage adaptés pour réguler la distance entre les surfaces circonférentielles définies par les rainures desdits rouleaux (6, 7).

6. Procédé selon la revendication 5, dans lequel ledit rouleau principal rainuré (6) et ledit rouleau secondaire de laminage (7) sont tous deux mis en rotation à une vitesse comprise entre 50 tr/min et 93 tr/min, de préférence entre 80 tr/min et 88 tr/min, avec un rapport de rotation différentiel entre le rouleau secondaire (7) et le rouleau principal (6) compris entre 1:1,10 et 1:1,40.

7. Procédé selon l'une quelconque des revendications 5 à 6, dans lequel la distance entre les surfaces circonférentielles définies par les rainures desdits rouleaux (6, 7) est comprise entre 2 mm et 10 mm, de préférence entre 6 et 8 mm.

8. Procédé selon l'une quelconque des revendications précédentes, dans lequel, à la fin de l'étape c) de tamisage, les fractions de caryopses de blé dur décortiqué broyés ayant une granulométrie supérieure à 500 µm sont récupérées et soumises à nouveau à l'étape b) de mouture et à l'étape c) de tamisage.
